# EUROPEAN PATENT SPECIFICATION

(11) **EP 4 276 978 B1**
(45) Date of publication and mention of the grant of the patent: **20.05.2026**
(21) Application number: 21917742.5
(22) Date of filing: 27.12.2021
(51) Int. Cl.: H01M 10/653, H01M 10/6554, H01M 50/209, H01M 10/613, H01M 10/647, H01M 10/651, H01M 10/6555, H01M 10/658, H01M 50/20

(54) **BATTERY MODULE**
BATTERIEMODUL
MODULE DE BATTERIE

(30) Priority: 08.01.2021 JP 2021002337
(43) Date of publication of application: 15.11.2023
(73) Proprietor: AESC Japan Ltd., Zama-shi, Kanagawa 252-0012 (JP)
(72) Inventor: BATTULA Lokesh Yadav, Zama-shi, Kanagawa 252-0012 (JP); SAKAMOTO Ryo, Zama-shi, Kanagawa 252-0012 (JP); NAKAI Masayuki, Zama-shi, Kanagawa 252-0012 (JP)
(74) Representative: Mathys & Squire
(86) International application number: PCT/JP2021/048514
(87) International publication number: WO 2022/149522

(56) References cited:
- WO-A1-2021/060735
- JP-A- 2010 218 716
- JP-A- 2012 248 374
- JP-A- 2021 163 538
- US-A1- 2013 130 087
- US-A1- 2015 221 996
- US-A1- 2018 048 036
- US-A1- 2020 076 024

## Description

### TECHNICAL FIELD

The present invention relates to a battery module.

### BACKGROUND ART

In recent years, various battery modules including a plurality of battery cells, and a cover housing the plurality of battery cells have been developed. Each of the battery cells might experience thermal runaway due to various factors such as internal short circuit or overcharge. It is therefore necessary to suppress thermal conduction from a battery cell entering thermal runaway to other battery cell.

Patent Document 1 describes one example of a battery module for suppressing thermal conduction from a battery cell entering thermal runaway to other battery cell. In the battery module, each battery cell is thermally coupled to a cooling plate. A heat resistant material and an endothermic plate are provided between adjacent battery cells. The endothermic plate is thermally coupled to the cooling plate.

Patent Document 2 describes one example of a battery module for suppressing thermal conduction from a battery cell entering thermal runaway to other battery cell. In the battery module, a heat resistant material is provided between adjacent battery cells. The disclosure of document US2013130087A1 is also relevant to understanding the invention.

### RELATED DOCUMENT

### PATENT DOCUMENT

Patent Document 1: International Patent Publication No. WO2020/013120
Patent Document 2: United States Patent Application Publication No. 2018/0048036, Specification

### SUMMARY OF THE INVENTION

### TECHNICAL PROBLEM

Even if a heat resistant material is provided between adjacent battery cells as described in Patent Document 1 or 2, for example, the thermal conduction may not be sufficiently suppressed from a battery cell entering thermal runaway to other battery cell. Even if heat generated from a battery cell entering thermal runaway is released to a cooling plate via an endothermic plate as described in Patent Document 1, for example, there is a possibility that the heat is conducted from the cooling plate to other battery cell.

One example of an object of the present invention is to sufficiently suppress, even if a battery cell experiences thermal runaway, thermal conduction from the battery cell entering thermal runaway to other battery cell. Other object of the present invention will become apparent from the description in the present description.

### SOLUTION TO PROBLEM

A battery module according to the present invention is defined in appended claim 1.

### ADVANTAGEOUS EFFECTS OF INVENTION

According to the aspect of the present invention, even if a battery cell experiences thermal runaway, thermal conduction from the battery cell entering thermal runaway to other battery cell can be sufficiently suppressed.

### BRIEF DESCRIPTION OF DRAWINGS

[Fig. 1] An exploded perspective view of a battery module according to an embodiment.
[Fig. 2] A top view of the battery module from which a top cover is removed.
[Fig. 3] An A-A' cross-sectional view of Fig. 1.
[Fig. 4] A B-B' cross-sectional view of Fig. 1.
[Fig. 5] A C-C' cross-sectional view of Fig. 1.
[Fig. 6] A graph illustrating one example of time transition of voltage in each of a plurality of battery cells.
[Fig. 7] A graph illustrating one example of time transition of temperature in each of a plurality of battery cells.
[Fig. 8] A diagram illustrating a variant of Fig. 3.

### DESCRIPTION OF EMBODIMENT

Hereinafter, an embodiment and a variant of the present invention are described by use of the drawings. Note that, in all of the drawings, a similar component is assigned with a similar reference sign, and description thereof is omitted as appropriate.

In the present description, unless otherwise specified, an ordinal number such as "first", "second", and "third" is assigned simply to distinguish a component assigned with a similar name, and does not mean a specific feature (e.g., an order or an importance degree) of the component.

Hereinafter, A being thermally coupled to B means that, for example, A is in direct contact with B, or that A is bonded to B via an element having thermal conductivity of equal to or more than 10 W/m•K, such as equal to or more than 100 W/m•K, such as a thermal conductive adhesive or the like.

Moreover, A being thermally insulated from B means that, for example, an element having thermal conductivity of less than 0.50 W/m•K, such as less than 0.10 W/m•K, such as air or the like exists between A and B.

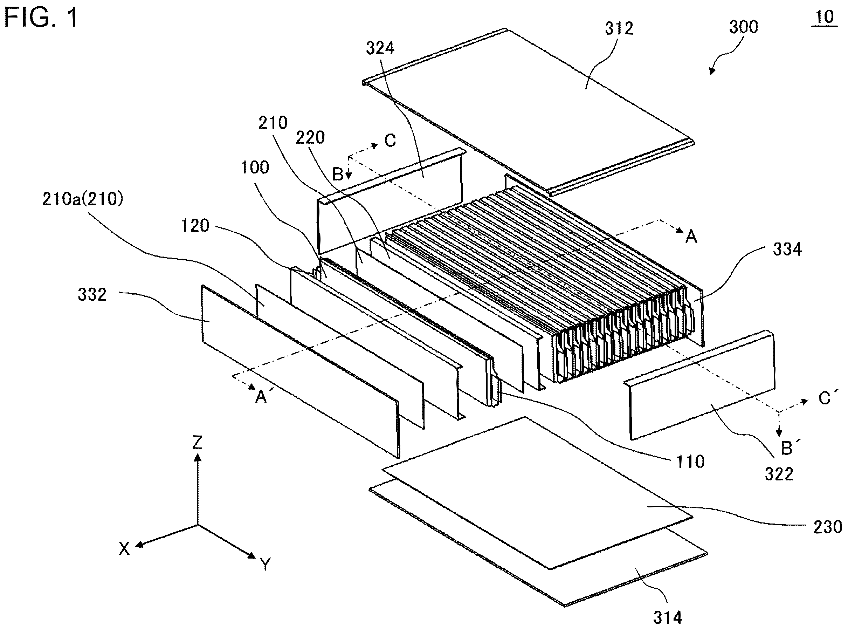

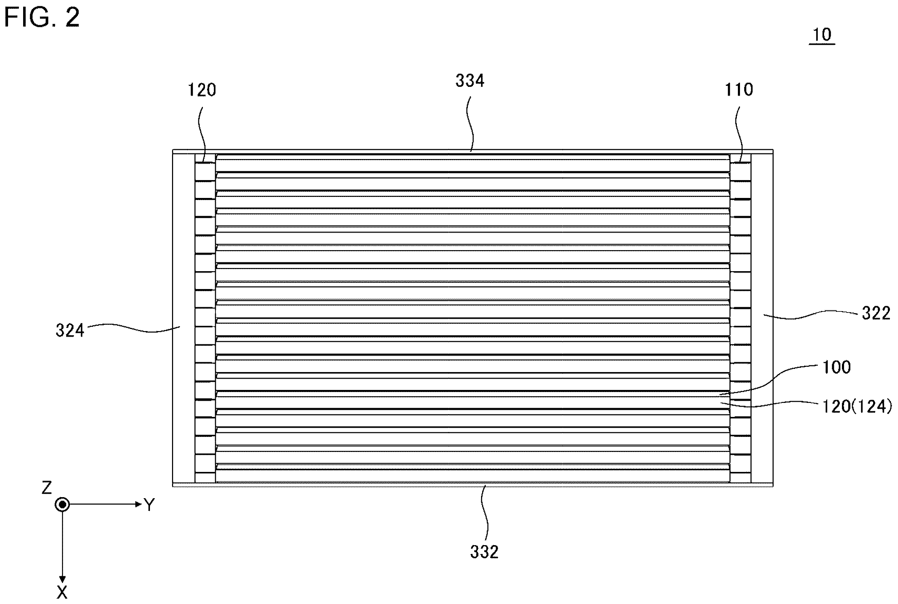

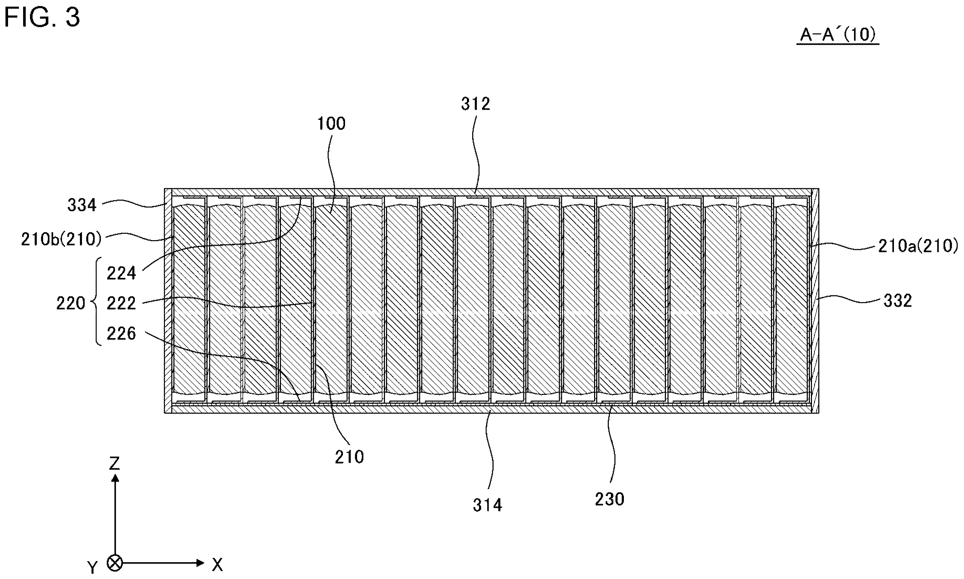

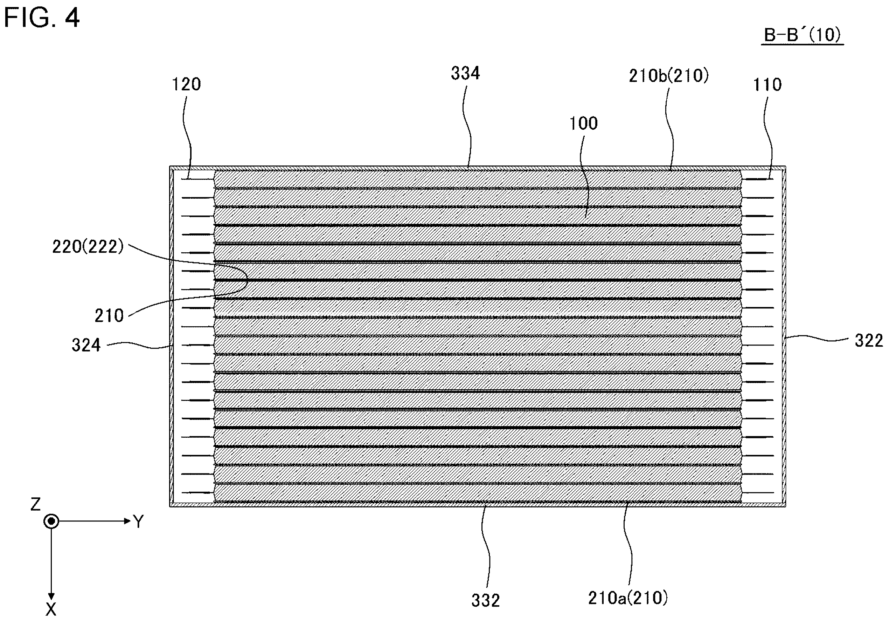

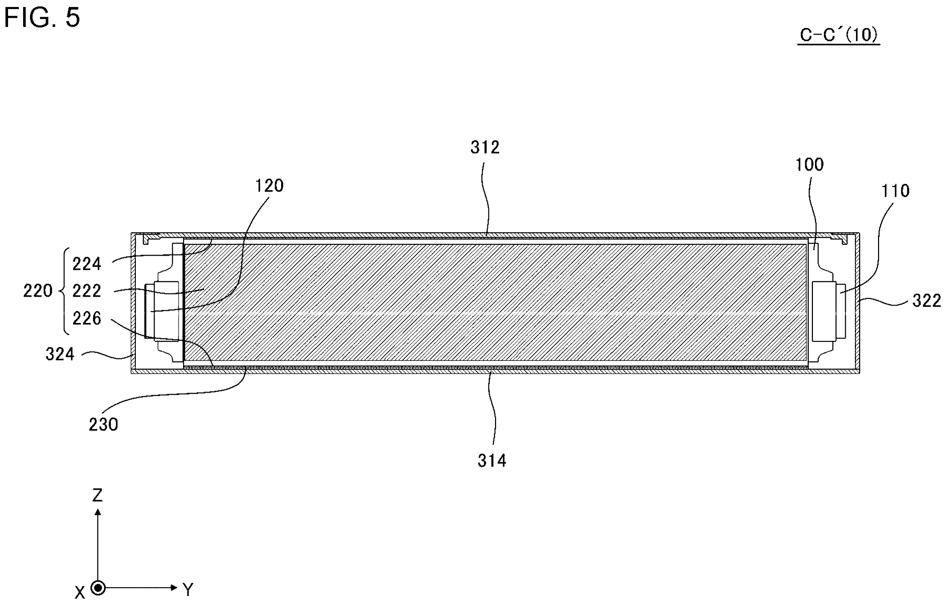

Fig. 1 is an exploded perspective view of a battery module 10 according to the embodiment. Fig. 2 is a top view of the battery module 10 from which a top cover 312 is removed. Fig. 3 is an A-A' cross-sectional view of Fig. 1. Fig. 4 is a B-B' cross-sectional view of Fig. 1. Fig. 5 is a C-C' cross-sectional view of Fig. 1.

In Figs. 1 to 5, an arrow indicating an X direction, a Y direction, or a Z direction indicates that a direction from a base end toward a tip end of the arrow is a positive direction in a direction indicated by the arrow, and a direction from the tip end toward the base end of the arrow is a negative direction in a direction indicated by the arrow. A white circle with a black dot indicating the X direction, the Y direction, or the Z direction indicates that a direction from a back side toward a front side of a sheet surface is a positive direction in a direction indicated by the arrow, and a direction from the front side toward the back side of the sheet surface is a negative direction in a direction indicated by the arrow. A white circle with X indicating the X direction, the Y direction, or the Z direction indicates that a direction from the front side toward the back side of the sheet surface is a positive direction in a direction indicated by the arrow, and a direction from the back side toward the front side of the sheet surface is a negative direction in a direction indicated by the arrow.

In Figs. 1 to 5, the X direction is one direction parallel to a horizontal direction orthogonal to a vertical direction. The positive direction in the X direction is a direction from a back side to a front side of the battery module 10. The negative direction in the X direction is a direction from the front side to the back side of the battery module 10. The Y direction is one direction parallel to the horizontal direction, and is orthogonal to the X direction. The positive direction in the Y direction is a direction from left toward right when viewed from a front side of the battery module 10. The negative direction in the Y direction is a direction from right toward left when viewed from the front side of the battery module 10. The Z direction is one direction parallel to the vertical direction. The positive direction in the Z direction is a direction from a lower side toward an upper side. The negative direction in the Z direction is a direction from the upper side to the lower side. A relationship between the vertical direction or the horizontal direction and the X direction, the Y direction, or the Z direction of the battery module 10 is not limited to the example described above. The relationship between the vertical direction or the horizontal direction and the X direction, the Y direction, or the Z direction of the battery module 10 differs from the example described above depending on arrangement of the battery module 10. For example, the X direction may be parallel to the vertical direction, and the Y direction and the Z direction may be parallel to the horizontal direction.

The battery module 10 includes a plurality of battery cells 100, a plurality of first elements 210, a plurality of second elements 220, a third element 230, and a housing portion 300.

Each of the battery cells 100 has a thickness in the X direction, has a longitudinal direction in the Y direction, and has a lateral direction in the Z direction. The plurality of battery cells 100 are arranged in the X direction.

A first lead 110 is provided at an end portion of each of the battery cells 100 on the positive direction side in the Y direction. A second lead 120 is provided at an end portion of each of the battery cells 100 on the negative direction side in the Y direction. A polarity of the first lead 110 is a positive polarity or a negative polarity. A polarity of the second lead 120 differs from the polarity of the first lead 110. Both the first lead 110 and the second lead 120 may be positioned on the positive direction side in the Y direction or the negative direction side in the Y direction of the battery cell 100.

The housing portion 300 includes a top cover 312, a bottom cover 314, a first end cover 322, a second end cover 324, a first side cover 332, and a second side cover 334. The top cover 312, the bottom cover 314, the first end cover 322, the second end cover 324, the first side cover 332 and the second side cover 334 are made of a thermal conductive material such as metal.

As illustrated in Figs. 1, 3, and 5, the top cover 312 covers an end portion of each of the battery cells 100 on the positive direction side in the Z direction. The bottom cover 314 covers an end portion of each of the battery cells 100 on the negative direction side in the Z direction. As illustrated in Figs. 1, 2, 4, and 5, the first end cover 322 covers an end portion of each of the battery cells 100 on the positive direction side in the Y direction. The second end cover 324 covers an end portion of each of the battery cells 100 on the negative direction side in the Y direction. As illustrated in Figs. 1, 2, 3 and 4, the first side cover 332 covers an end portion of the plurality of battery cells 100 on the positive direction side in the X direction. The second side cover 334 covers an end portion of the plurality of battery cells 100 on the negative direction side in the X direction.

As illustrated in Figs. 1, 3 and 4, each of the plurality of first elements 210 is positioned between the adjacent battery cells 100, except for a fourth element 210a being the first element 210 positioned on one end side of the positive direction side in the X direction of the plurality of battery cells 100, and a fifth element 210b being the first element 210 positioned on the other end side of the negative direction side in the X direction of the plurality of battery cells 100. The first element 210 is, for example, a low thermal conductivity material or a heat resistant material such as mica or urethane. Thermal conductivity of the first element 210 is relatively low, and is, according to the invention, less than 1.0 W/m•K, such as less than 0.10 W/m•K. As the first element 210 is positioned between the adjacent battery cells 100, thermal conduction between the adjacent battery cells 100 can be suppressed, as compared with a case where the first element 210 is not positioned between the adjacent battery cells 100.

As illustrated in Figs. 1, 3, and 4, each of the plurality of second elements 220 is positioned between the battery cell 100 and the first element 210. The second element 220 has thermal conductivity higher than thermal conductivity of the first element 210. The second element 220 is, for example, a thermal conductive material such as a metal such as aluminum, copper, or the like. The thermal conductivity of the second element 220 is relatively high, and is, according to the invention, equal to or more than 10 W/m•K, such as equal to or more than 100 W/m•K.

As illustrated in Figs. 1, 3 and 5, the third element 230 is positioned between the bottom cover 314 and the end portions of the plurality of battery cells 100 on the negative direction side in the Z direction. The third element 230 is thermally coupled to the bottom cover 314 and the second element 220. The third element 230 is, for example, a thermal conductive adhesive. Thermal conductivity of the third element 230 is relatively high, and is, for example, equal to or more than 10 W/m•K, such as equal to or more than 100 W/m•K.

As illustrated in Figs. 3 and 5, the second element 220 includes a first extending portion 222, a second extending portion 224, and a third extending portion 226.

As illustrated in Figs. 3 and 5, the first extending portion 222 extends along a ZX plane between adjacent battery cells 100.

As illustrated in Fig. 3, the second extending portion 224 extends in a direction intersecting the first extending portion 222 between the top cover 312 and the end portion of each of the battery cells 100 on the positive direction side in the Z direction. Specifically, the second extending portion 224 extends from an end portion of the first extending portion 222 on the positive direction side in the Z direction toward the negative direction in the X direction. A surface of the second extending portion 224 on the positive direction side in the Z direction is in direct contact with the top cover 312. Thus, the second extending portion 224 is thermally coupled to the top cover 312. In an embodiment out of the scope of the present invention, the surface of the second extending portion 224 on the positive direction side in the Z direction may be bonded to the top cover 312 via, for example, a thermal conductive adhesive. When the second element 220 includes the second extending portion 224, a contact area between the second element 220 and the top cover 312 can be enlarged, and heat can be easily conducted from the second element 220 to the top cover 312, as compared with a case where the second element 220 does not include the second extending portion 224, and the end portion of the first extending portion 222 on the positive direction side in the Z direction is in contact with the top cover 312. The second element 220, including the third extending portion 226, may not include the second extending portion 224. That is to say, the end portion of the first extending portion 222 on the positive direction side in the Z direction may be in contact with the top cover 312.

As illustrated in Fig. 3, the third extending portion 226 extends in a direction intersecting the first extending portion 222 between the third element 230 and the end portion of each of the battery cells 100 on the negative direction side in the Z direction. Specifically, the third extending portion 226 extends from the end portion of the first extending portion 222 on the negative direction side in the Z direction toward the negative direction in the X direction. A surface of the third extending portion 226 on the negative direction side in the Z direction is bonded to the bottom cover 314 via the third element 230. Thus, the third extending portion 226 is thermally coupled to the third element 230 and the bottom cover 314. In an embodiment out of the scope of the present invention, the surface of the third extending portion 226 on the negative direction side in the Z direction may be in direct contact with the bottom cover 314 without through the third element 230. When the second element 220 includes the third extending portion 226, a contact area between the second element 220 and the third element 230 can be enlarged, and heat can be easily conducted from the second element 220 to the bottom cover 314, as compared with a case where the second element 220 does not include the third extending portion 226, and the end portion of the first extending portion 222 on the negative direction side in the Z direction is thermally coupled to the bottom cover 314. The second element 220, including the second extending portion 224, may not include the third extending portion 226. That is to say, the end portion of the first extending portion 222 on the negative direction side in the Z direction may be in contact with the third element 230.

A thickness of the first element 210 in the X direction, a thickness of the first extending portion 222 in the X direction, a thickness of the second extending portion 224 in the Z direction, a thickness of the third extending portion 226 in the Z direction, and a thickness of the third element 230 in the Z direction are not particularly limited, but may be appropriately determined according to various conditions, such as a heat generation amount of the battery cell 100, a heat capacity of the housing portion 300, or the like.

As illustrated in Figs. 3 and 5, a gap is provided between the top cover 312 and the end portion of each of the battery cells 100 on the positive direction side in the Z direction. That is to say, the top cover 312 and the end portion of each of the battery cells 100 on the positive direction side in the Z direction are not in direct contact with each other. Accordingly, the end portion of each of the battery cells 100 on the positive direction side in the Z direction can be thermally insulated from the top cover 312 more easily than in a case where a low thermal conductivity material or a heat resistant material is provided between the top cover 312 and the end portion of each of the battery cells 100 on the positive direction side in the Z direction. A gap is provided between the third element 230 and the end portion of each of the battery cells 100 on the negative direction side in the Z direction. That is to say, the third element 230 and the end portion of each of the battery cells 100 on the negative direction side in the Z direction are not in direct contact with each other. Accordingly, the end portion of each of the battery cells 100 on the negative direction side in the Z direction can be thermally insulated from the third element 230 more easily than in a case where a low thermal conductivity material or a heat resistant material is provided between the third element 230 and the end portion of each of the battery cells 100 on the negative direction side in the Z direction. A portion of the first element 210 may be placed in a gap between the top cover 312 and the end portion of each of the battery cells 100 on the positive direction side in the Z direction, and a gap between the bottom cover 314 and the end portion of each of the battery cells 100 on the negative direction side in the Z direction.

As illustrated in Figs. 4 and 5, a gap is provided between the first end cover 322 and the end portion of each of the battery cells 100 on the positive direction side in the Y direction. A gap is provided between the second end cover 324 and the end portion of each of the battery cells 100 on the negative direction side in the Y direction. When the gaps are provided, repetition of thermal runaway between the neighboring battery cells 100 can be suppressed as follows, as compared with a case where the first end cover 322 and the end portion of each of the battery cells 100 on the positive direction side in the Y direction are in contact with each other, and the second end cover 324 and the end portion of each of the battery cells 100 on the negative direction side in the Y direction are in contact with each other. That is to say, heat of the battery cell 100 on the most positive direction side in the X direction among the plurality of battery cells 100 can be conducted to the first end cover 322 and the second end cover 324 through the first side cover 332. Heat of the battery cell 100 on the most negative direction side in the X direction among the plurality of battery cells 100 can be conducted to the first end cover 322 and the second end cover 324 through the second side cover 334. When the gap described above is provided, however, heat can be caused to be less easily transferred from the first end cover 322 or the second end cover 324 to the battery cell 100, as compared with a case where the first end cover 322 and the end portion of each of the battery cells 100 on the positive direction side in the Y direction are in contact with each other, and the second end cover 324 and the end portion of each of the battery cells 100 on the negative direction side in the Y direction are in contact with each other.

As illustrated in Figs. 3 and 4, the fourth element 210a is positioned between the first side cover 332 and one end of each of the plurality of battery cells 100 on the positive direction side in the X direction. The fourth element 210a can function as a first buffer material for buffering physical force such as vibration or impact. The fifth element 210b is positioned between the second side cover 334 and the other end of each of the plurality of battery cells 100 on the negative direction side in the X direction. The fifth element 210b can function as a second buffer material for buffering physical force such as vibration or impact. Instead of a low thermal conductivity material or a heat resistant material such as the fourth element 210a, another member capable of functioning as a first buffer material may be provided between the first side cover 332 and one end of each of the plurality of battery cells 100 on the positive direction side in the X direction. Instead of a low thermal conductivity material or a heat resistant material such as the fifth element 210b, another member capable of functioning as a second buffer material may be provided between the second side cover 334 and the other end of each of the plurality of battery cells 100 on the negative direction side in the X direction.

As illustrated in Figs. 3 and 4, the plurality of battery cells 100 are pressed by the first side cover 332 toward the negative direction in the X direction through the fourth element 210a. The plurality of battery cells 100 are pressed by the second side cover 334 toward the positive direction in the X direction through the fifth element 210b. Thus, the plurality of battery cells 100 are clamped by the housing portion 300 through the fourth element 210a and the fifth element 210b. The plurality of battery cells 100 can be therefore suspended from the third element 230.

As illustrated in Fig. 3, the second extending portion 224 is thermally coupled to the first portion of the housing portion 300 covering a portion of each of the battery cells 100, specifically, the top cover 312. The above-described portion of each of the battery cells 100, specifically, the end portion of each of the battery cells 100 on the positive direction side in the Z direction is thermally insulated from the top cover 312. The third extending portion 226 is thermally coupled to the second portion of the housing portion 300 covering other portion of each of the battery cells 100, specifically, the bottom cover 314 through the third element 230. The other portion of each of the battery cells 100, specifically, the end portion of each of the battery cells 100 on the negative direction side in the Z direction is thermally insulated from the bottom cover 314.

In the present embodiment, thermal conduction from the battery cell 100 entering thermal runaway to other of the battery cells 100 can be sufficiently suppressed as compared with a case where the end portion of each of the battery cells 100 on the positive direction side in the Z direction is thermally coupled to the top cover 312, and a case where the end portion of each of the battery cells 100 on the negative direction side in the Z direction is thermally coupled to the bottom cover 314. Specifically, the heat generated from the battery cell 100 entering thermal runaway is conducted to the top cover 312 or the bottom cover 314 through the second element 220 neighboring the battery cell 100 entering thermal runaway. Further, the heat conducted to the top cover 312 or the bottom cover 314 is conducted to other second element 220 different from the second element 220 neighboring the battery cell 100 entering thermal runaway. In the present embodiment, conduction of heat conducted to the top cover 312 or the bottom cover 314 can be suppressed from conducting toward the battery cell 100, as compared with a case where the end portion of each of the battery cells 100 on the positive direction side in the Z direction is thermally coupled to the top cover 312, and a case where the end portion of each of the battery cells 100 on the negative direction side in the Z direction is thermally coupled to the bottom cover 314. Accordingly, heat can be dispersed over the entire battery module 10 while suppressing thermal conduction from the battery cell 100 entering thermal runaway to other battery cells 100, as compared with a case where the end portion of each of the battery cells 100 on the positive direction side in the Z direction is thermally coupled to the top cover 312, and a case where the end portion of each of the battery cells 100 on the negative direction side in the Z direction is thermally coupled to the bottom cover 314.

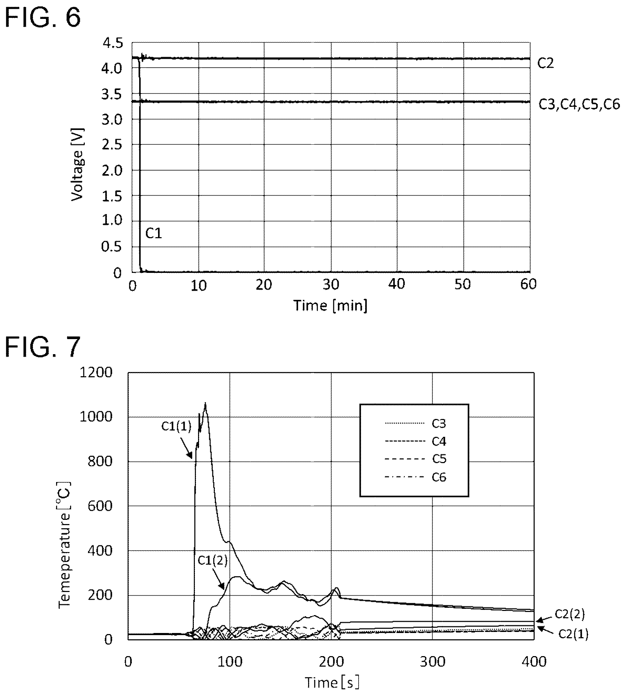

Fig. 6 is a graph illustrating one example of time transition of voltage in each of a plurality of battery cells 100.

In the graph of Fig. 6, a horizontal axis indicates time (unit: minute). A vertical axis indicates the voltage (unit: V) of the battery cell 100.

The graph in Fig. 6 illustrates time transition of voltage of the neighboring six battery cells 100. The time transition of the voltage was measured under the following condition.

Similar to the example illustrated in Fig. 3, a gap was provided between the top cover 312 and an end portion of each of the battery cells 100 covered by the top cover 312. A gap was provided between the bottom cover 314 and an end portion of each of the battery cells 100 covered by the bottom cover 314.

Mica with a thickness of 1 mm was used as the first element 210.

Aluminum with a thickness of 1 mm was used as the second element 220. The second element 220 includes the first extending portion 222, the second extending portion 224, and the third extending portion 226, similar to the example illustrated in Fig. 3.

A heater was provided on a side of the first battery cell 100 from one end of the six battery cells 100 opposite to a side where the second battery cell 100 from the one end was positioned. Heating of the heater caused the first battery cell 100 from the one end to enter thermal runaway.

A state of charge (SOC) of each of the first and second battery cells 100 from the one end was 100 %. An SOC of each of the third to sixth battery cells 100 from the one end was 5 %.

In the graph of Fig. 6, "C1" to "C6" indicate time transition of voltage of the first to sixth battery cells 100 from the one end respectively.

As illustrated in the graph of Fig. 6, in the first battery cell 100 from the one end, voltage drops from about 4.2 V to 0 V due to thermal runaway in a vicinity of a time of about 1 minute. In contrast, in the second to sixth battery cells 100 from the one end, no voltage drop occurs after the thermal runaway.

A result illustrated in Fig. 6 suggests that thermal conduction from the battery cell 100 entering thermal runaway to other battery cells 100 is sufficiently suppressed by the gap provided between the top cover 312 and the end portion of each of the battery cells 100 covered by the top cover 312, and the gap provided between the bottom cover 314 and the end portion of each of the battery cells 100 covered by the bottom cover 314.

Fig. 7 is a graph illustrating one example of time transition of temperature in each of the plurality of battery cells 100.

In the graph of Fig. 7, a horizontal axis indicates time (unit: second). A vertical axis illustrates temperature (unit: °C) of the battery cell 100.

The graph in Fig. 7 illustrates time transition of temperature at eight points described later in the six neighboring battery cells 100. The time transition of the temperature was measured under the same condition as the condition described by use of Fig. 6 in which time transition of voltage was measured.

In the graph of Fig. 7, "C1(1)" indicates temperature transition on a side of the first battery cell 100 from one end of the six battery cells 100 opposite to a side where the second battery cell 100 from the one end is positioned. "C1(2)" indicates temperature transition on a side of the first battery cell 100 from the one end where the second battery cell 100 from the one end is positioned. "C2(1)" indicates temperature transition on a side of the second battery cell 100 from the one end where the first battery cell 100 from the one end is positioned. "C2(2)" indicates the temperature transition on a side of the second battery cell 100 from the one end where the third battery cell 100 from the one end is positioned. "C3" indicates temperature transition on a side of the third battery cell 100 from the one end where the second battery cell 100 from the one end is positioned. "C4" indicates temperature transition on a side of the fourth battery cell 100 from the one end where the third battery cell 100 from the one end is positioned. "C5" indicates temperature transition on a side of the fifth battery cell 100 from the one end where the fourth battery cell 100 from one end is positioned. "C6" indicates temperature transition on a side of the sixth battery cell 100 from the one end where the fifth battery cell 100 from the one end is positioned.

Temperature on a side of the first battery cell 100 from the one end opposite to a side where the second battery cell 100 from the one end is positioned rises sharply in a vicinity of a time of about 60 seconds, and reaches about 1000 °C in a vicinity of a time of about 75 seconds. Temperature on a side of the first battery cell 100 from the one end where the second battery cell 100 from the one end is positioned rises from a vicinity of a time of about 75 seconds, and reaches 300 °C at a time of about 100 seconds. In contrast, temperature of the second to sixth battery cells 100 from the one end is suppressed to equal to or less than about 100°C at any time.

A result illustrated in Fig. 7 suggests that thermal conduction from the battery cell 100 entering thermal runaway to other battery cells 100 is sufficiently suppressed by the gap provided between the top cover 312 and the end portion of each of the battery cells 100 covered by the top cover 312, and the gap provided between the bottom cover 314 and the end portion of each of the battery cells 100 covered by the bottom cover 314.

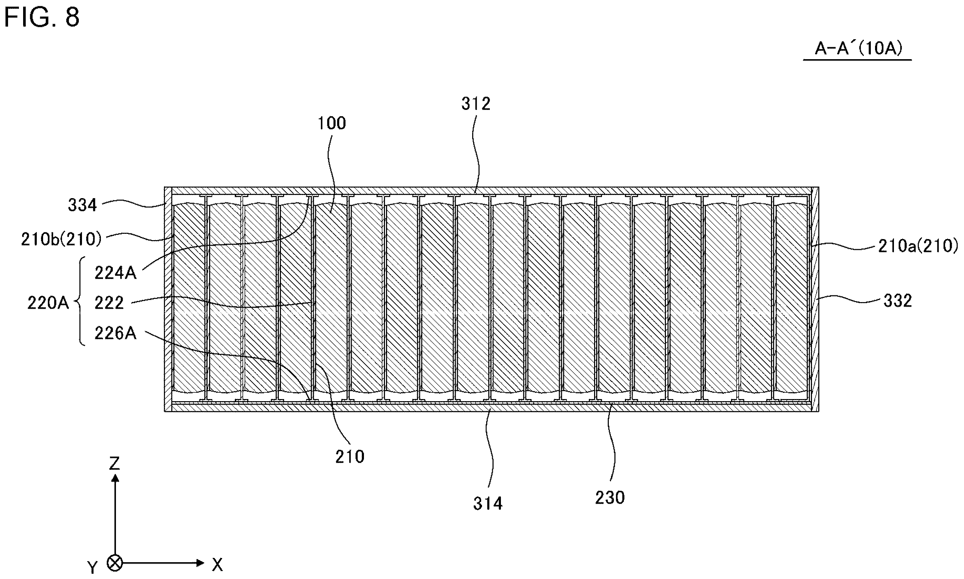

Fig. 8 is a diagram illustrating a variant of Fig. 3. A battery module 10A according to the present variant is similar to the battery module 10 according to the embodiment except for the following point.

The battery module 10A includes a second element 220A. The second element 220A includes a first extending portion 222, a second extending portion 224A, and a third extending portion 226A.

The second extending portion 224A extends from an end portion of the first extending portion 222 on the positive direction side in the Z direction toward both the positive direction in the X direction and the negative direction in the X direction. The second element 220A, including the third extending portion 226A, may not include the second extending portion 224A. That is to say, the end portion of the first extending portion 222 on the positive direction side in the Z direction may be in contact with the top cover 312.

The third extending portion 226A extends from the end portion of the first extending portion 222 on the negative direction side in the Z direction toward both the positive direction in the X direction and the negative direction in the X direction. The second element 220A, including the second extending portion 224A, may not include the third extending portion 226A. That is to say, the end portion of the first extending portion 222 on the negative direction side in the Z direction may be in contact with the third element 230.

The embodiment and the variant according to the present invention have been described above with reference to the drawings, but are exemplifications of the present invention, and various configurations other than the above may be adopted.

For example, in the present embodiment, a gap is provided between the top cover 312 and the end portion of each of the battery cells 100 on the positive direction side in the Z direction. A low thermal conductivity material or a heat resistant material may be however positioned between the top cover 312 and the end portion of each of the battery cells 100 on the positive direction side in the Z direction. The low thermal conductivity material or the heat resistant material can thermally insulate the end portion of each of the battery cells 100 on the positive direction side in the Z direction from the top cover 312. A low thermal conductivity material or a heat resistant material may also be positioned between the bottom cover 314 and the end portion of each of the battery cells 100 on the negative direction side in the Z direction.

In the present embodiment, the second element 220 is thermally coupled to both the top cover 312 and the bottom cover 314 In an embodiment out of the scope of the present invention, the second element 220 may be however thermally coupled to only one of the top cover 312 and the bottom cover 314. For example, in an embodiment out of the scope of the present invention, the end portion of the second element 220 on the positive direction side in the Z direction may be spaced apart from the top cover 312. In the example, heat can be released into air from the end portion of the second element 220 in the positive direction of the Z direction. The end portion of the second element 220 on the negative direction side in the Z direction may be spaced apart from the bottom cover 314. In the example, heat can be released into air from the end portion of the second element 220 on the negative direction side in the Z direction.

In the present invention, the first element 210 is a specific material such as a low thermal conductivity material or a heat resistant material. In an embodiment out of the scope of the present invention, the first element 210 may be however a gap such as air instead of a material.

The shape of the second element is not limited to the shape according to the present embodiment or the variant. For example, one of the second extending portion and the third extending portion may extend from the end portion of the first extending portion in the Z direction toward the negative direction in the X direction, similar to the second extending portion 224 or the third extending portion 226 according to the embodiment, and the other of the second extending portion and the third extending portion may extend from the end portion of the first extending portion in the Z direction toward both the positive direction in the X direction and the negative direction in the X direction, similar to the second extending portion 224A or the third extending portion 226A according to the variant.

### REFERENCE SIGNS LIST

- 10: Battery module
- 10A: Battery module
- 100: Battery cell
- 110: First lead
- 120: Second lead
- 210: First element
- 210a: Fourth element
- 210b: Fifth element
- 220: Second element
- 220A: Second element
- 222: First extending portion
- 224: Second extending portion
- 224A: Second extending portion
- 226: Third extending portion
- 226A: Third extending portion
- 230: Third element
- 300: Housing portion
- 312: Top cover
- 314: Bottom cover
- 322: First end cover
- 324: Second end cover
- 332: First side cover
- 334: Second side cover

## Claims

1. A battery module (10, 10A) comprising:
a plurality of battery cells (100);
a housing portion (300) housing the plurality of battery cells (100);
a first element (210) positioned between the adjacent battery cells (100), and having thermal conductivity of less than 1.0 W/m•K; and
a second element (220, 220A) positioned between the first element (210) and a battery cell (100), and having thermal conductivity of equal to or more than 10 W/m•K, wherein
the second element (220, 220A) is in direct contact with and thermally coupled to a first portion (312) of the housing portion (300) covering a portion of each of battery cells (100), and
the portion of each of battery cells (100) is thermally insulated from the first portion (312) of the housing portion (300), and **characterized in that**
a third element (230) thermally coupled to the second element (220, 220A) and thermally coupled to a second portion (314) of the housing portion (300) covering another portion of each of battery cells (100), the third element (230) having thermal conductivity higher than thermal conductivity of the first portion (312) of the housing portion (300).

2. The battery module (10, 10A) according to claim 1, wherein
a gap is provided between the first portion (312) of the housing portion (300) and the portion of each of battery cells (100).

3. The battery module (10, 10A) according to claim 1 or 2, further comprising:
a first buffer material positioned on one end side of the plurality of battery cells (100); and
a second buffer material positioned on the other end side of the plurality of battery cells (100), wherein
the plurality of battery cells (100) are clamped by the housing portion (300) through the first buffer material and the second buffer material.

4. The battery module (10, 10A) according to any one of claims 1 to 3, wherein
the second element (220, 220A) includes a first extending portion (222) extending between the adjacent battery cells (100), and a second extending portion (224, 224A) extending in a direction intersecting the first extending portion (222) between the portion of each of battery cells (100) and the first portion (312) of the housing portion (300).

## Patentansprüche

1. Batteriemodul (10, 10A), das Folgendes umfasst:
eine Vielzahl von Batteriezellen (100);
einen Gehäuseabschnitt (300), der die Vielzahl von Batteriezellen (100) aufnimmt;
ein erstes Element (210), das zwischen den benachbarten Batteriezellen (100) positioniert ist und eine Wärmeleitfähigkeit von weniger als 1,0 W/m•K aufweist; und
ein zweites Element (220, 220A), das zwischen dem ersten Element (210) und einer Batteriezelle (100) positioniert ist und eine Wärmeleitfähigkeit von gleich oder mehr als 10 W/m•K aufweist, wobei
das zweite Element (220, 220A) in direktem Kontakt mit einem ersten Abschnitt (312) des Gehäuseabschnitts (300) steht und thermisch mit diesem gekoppelt ist, der einen Abschnitt jeder der Batteriezellen (100) abdeckt, und
der Abschnitt jeder der Batteriezellen (100) thermisch von dem ersten Abschnitt (312) des Gehäuseabschnitts (300) isoliert ist, und **dadurch gekennzeichnet, dass**
ein drittes Element (230) thermisch mit dem zweiten Element (220, 220A) gekoppelt ist und thermisch mit einem zweiten Abschnitt (314) des Gehäuseabschnitts (300) gekoppelt ist, der einen anderen Abschnitt jeder der Batteriezellen (100) abdeckt, wobei das dritte Element (230) eine Wärmeleitfähigkeit aufweist, die höher ist als die Wärmeleitfähigkeit des ersten Abschnitts (312) des Gehäuseabschnitts (300).

2. Batteriemodul (10, 10A) nach Anspruch 1, wobei
zwischen dem ersten Abschnitt (312) des Gehäuseabschnitts (300) und dem Abschnitt jeder der Batteriezellen (100) ein Spalt bereitgestellt ist.

3. Batteriemodul (10, 10A) nach Anspruch 1 oder 2, das ferner Folgendes umfasst:
ein erstes Puffermaterial, das an einer Endseite der Vielzahl von Batteriezellen (100) positioniert ist; und
ein zweites Puffermaterial, das an der anderen Endseite der Vielzahl von Batteriezellen (100) positioniert ist, wobei
die Vielzahl von Batteriezellen (100) durch den Gehäuseabschnitt (300) durch das erste Puffermaterial und das zweite Puffermaterial eingeklemmt sind.

4. Batteriemodul (10, 10A) nach einem der Ansprüche 1 bis 3, wobei
das zweite Element (220, 220A) einen ersten Erstreckungsabschnitt (222), der sich zwischen den benachbarten Batteriezellen (100) erstreckt, und einen zweiten Erstreckungsabschnitt (224, 224A) enthält, der sich in einer Richtung erstreckt, die den ersten Erstreckungsabschnitt (222) zwischen dem Abschnitt jeder der Batteriezellen (100) und dem ersten Abschnitt (312) des Gehäuseabschnitts (300) schneidet.

## Revendications

1. Module de batterie (10, 10A) comprenant :
une pluralité de cellules de batterie (100) ;
une partie de boîtier (300) abritant la pluralité de cellules de batterie (100) ;
un premier élément (210) positionné entre les cellules de batterie adjacentes (100), et ayant une conductivité thermique inférieure à 1,0 W/m•K ; et
un deuxième élément (220, 220A) positionné entre le premier élément (210) et une cellule de batterie (100), et ayant une conductivité thermique égale ou supérieure à 10 W/m•K, dans lequel
le deuxième élément (220, 220A) est en contact direct avec, et thermiquement couplé à, une première partie (312) de la partie de boîtier (300) couvrant une partie de chacune des cellules de batterie (100), et
la partie de chacune des cellules de batterie (100) est thermiquement isolée de la première partie (312) de la partie de boîtier (300), et **caractérisé par**
un troisième élément (230) thermiquement couplé au deuxième élément (220, 220A) et thermiquement couplé à une seconde partie (314) de la partie de boîtier (300) couvrant une autre partie de chacune des cellules de batterie (100), le troisième élément (230) ayant une conductivité thermique supérieure à celle de la première partie (312) de la partie de boîtier (300).

2. Module de batterie (10, 10A) selon la revendication 1, dans lequel
un espace est fourni entre la première partie (312) de la partie de boîtier (300) et la partie de chacune des cellules de batterie (100).

3. Module de batterie (10, 10A) selon la revendication 1 ou 2, comprenant en outre :
un premier matériau tampon positionné d'un côté d'extrémité de la pluralité de cellules de batterie (100) ; et
un second matériau tampon positionné de l'autre côté d'extrémité de la pluralité de cellules de batterie (100), dans lequel
la pluralité de cellules de batterie (100) est serrée par la partie du boîtier (300) par le biais du premier matériau tampon et du second matériau tampon.

4. Module de batterie (10, 10A) selon l'une quelconque des revendications 1 à 3, dans lequel
le deuxième élément (220, 220A) comporte une première partie prolongée (222) s'étendant entre les cellules de batterie adjacentes (100), et une seconde partie prolongée (224, 224A) s'étendant dans une direction intersectant la première partie prolongée (222) entre la partie de chacune des cellules de batterie (100) et la première partie (312) de la partie de boîtier (300).
